(19) Europäisches Patentamt
European Patent Office
Office européen des brevets

(11) **EP 3 011 483 B1**

(12) **EUROPEAN PATENT SPECIFICATION**

(45) Date of publication and mention
of the grant of the patent:
**09.02.2022 Bulletin 2022/06**

(21) Application number: **14814408.2**

(22) Date of filing: **17.06.2014**

(51) International Patent Classification (IPC):
*G06F 3/01* (2006.01)   *G06F 3/0488* (2013.01)
*G06F 21/32* (2013.01)   *G06K 9/00* (2006.01)
*H04L 29/06* (2006.01)   *H04M 1/67* (2006.01)

(52) Cooperative Patent Classification (CPC):
**G06F 21/32; G06F 3/017; G06F 3/04883;
G06V 40/10; G06V 40/28; H04L 63/0861;**
G06F 2203/04101; H04M 1/67; H04M 2250/22

(86) International application number:
**PCT/IB2014/062293**

(87) International publication number:
**WO 2014/203163 (24.12.2014 Gazette 2014/52)**

(54) **SYSTEM, DEVICE, AND METHOD OF DETECTING IDENTITY OF A USER OF A MOBILE ELECTRONIC DEVICE**

SYSTEM, VORRICHTUNG UND VERFAHREN ZUR ERKENNUNG DER IDENTITÄT EINES BENUTZERS EINER MOBILEN ELEKTRONISCHEN VORRICHTUNG

SYSTÈME, DISPOSITIF ET PROCÉDÉ DE DÉTECTION D'IDENTITÉ D'UN UTILISATEUR D'UN DISPOSITIF ÉLECTRONIQUE MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2013 US 201313922271**

(43) Date of publication of application:
**27.04.2016 Bulletin 2016/17**

(73) Proprietor: **BIOCATCH LTD.
Tel Aviv 6701104 (IL)**

(72) Inventor: **TURGEMAN, Avi
Cambridge, Massachusetts 02138 (US)**

(74) Representative: **Beck Greener LLP
Fulwood House
12 Fulwood Place
London WC1V 6HR (GB)**

(56) References cited:
**US-A1- 2005 008 148      US-A1- 2010 225 443
US-A1- 2011 016 320      US-A1- 2011 202 453
US-A1- 2012 007 713      US-A1- 2012 167 170
US-A1- 2012 246 737      US-A1- 2013 133 055
US-A1- 2013 135 218      US-B1- 6 819 219
US-B2- 7 818 290**

**Description**

**FIELD**

The present invention is relates to a computer-implemented method and a system for confirming identity of a user of a mobile electronic device. In embodiments there are disclosed methods and systems related to the security of electronic devices and systems.

**BACKGROUND**

Millions of people around the world utilize mobile electronic devices, such as smartphones and tablets, in order to perform various activities. Such activities may include, for example, browsing the Internet, sending and receiving electronic mail (email) messages, taking photographs and videos, engaging in a video conference or a chat session, playing games, or the like.

Some activities may be privileged, or may require authentication of the user in order to ensure that only an authorized user engages in the activity. For example, a user may be required to enter a username and a password in order to access an email account, or in order to access an online banking interface or website.

US-A-2012/167,170 discloses a method for providing passive user identification that may include causing selective processing of data indicative of characteristics of a user of a device by aggregating one or more modality specific biometric classification processes conducted in background operation of the device. The method further comprises comparing selectively processed data to a profile of a currently logged in or default user to determine the likelihood that the user corresponds to the currently logged in or default user.

US-A-2013/135,218 discloses a system and method for identifying users of touchscreens according to a touch-gesture profile. The profile includes stored electrical characteristics of contact with a touchscreen. The profile is correlated with applications opened and/or accessed, along with any associated metadata, as well as media exposure data derived from audio received at the device. The correlated information may be used to confirm identification of one or more individuals using a device for audience measurement purposes.

US-A-2010/225,443 discloses for the purpose of user authentication, accepting finger touch information from a user via a touch sensitive element. The finger touch information includes at least a time series of finger touch samples that define a trace of the user's signature. Each of the finger touch samples includes centroid coordinates and non-centroid information, the non-centroid information including at least one of a shape of the finger touch sample, a size of the finger touch sample, and orientation of the finger touch samples and characteristics of a multi-touch finger touch sample.

**SUMMARY**

The present invention is a computer-implemented method and a system for confirming identity of a user of a mobile electronic device, as defined in the independent claims.

There is disclosed a method for confirming identity of a user of a mobile electronic device may comprise: receiving touch data from a touch-screen of the mobile electronic device; receiving acceleration data from an accelerometer of the mobile electronic device; correlating between the touch data and the acceleration data; based on the correlating, generating a user-specific trait indicative of said user.

There is disclosed a method that may comprise: storing a reference value of the user-specific trait, indicative of said user; in a subsequent usage session of the mobile electronic device, generating a current value of the user-specific trait correlating between touch data and acceleration data; and based on a comparison between the current value of the user-specific trait and the reference value of the user-specific trait, determining whether or not a current user of the mobile electronic device is an authorized user of the mobile electronic device.

In accordance with the present disclosure, for example, storing comprises: storing within said mobile electronic device; and said comparison is performed within said mobile electronic device.

In accordance with the present disclosure, for example, storing comprises storing externally to said mobile electronic device; and said comparison is performed externally to said mobile electronic device, and comprises wirelessly receiving at the mobile electronic device an indication of said comparison.

In accordance with the present disclosure, for example, said touch data comprises non-tactile touch data indicating a hovering user gesture in proximity to said touch-screen.

In accordance with the present disclosure, for example, the method may comprise: receiving gyroscope data from a gyroscope of the mobile electronic device; correlating between the touch data and the gyroscope data; based on the correlating between the touch data and the gyroscope data, generating another user-specific trait indicative of said user.

In accordance with the present disclosure, for example, the method may comprise: capturing non-tactile motion data indicating a user gesture; correlating between the non-tactile motion data and the acceleration data; based on the correlating between the non-tactile motion data and the acceleration data, generating another user-specific trait indicative of said user.

In accordance with the present disclosure, for example, the method may comprise: comparing between (a) a currently-calculated value of the user-specific trait, corresponding to a current usage of the mobile electronic device, and (b) a previously-calculated value of the user-specific trait, corresponding to a previous usage of the mobile electronic device; and based on a comparison result, performing at least one of: restricting access of said user to an online service; restricting access of said user to an application installed on said mobile electronic device; requiring the user to authenticate his identity to an online service; requiring the user to authenticate his identity to an application installed on said mobile electronic device.

In accordance with the present disclosure, for example, the method may comprise: based on said touch data, estimating user-specific motor control parameters and user-specific motor control noise; and based on the estimated user-specific motor control parameters and user-specific motor control noise, differentiating between said user and another user.

In accordance with the present disclosure, for example, the method may comprise: based on said touch data, estimating user-specific motor control parameters and user-specific motor control noise of a control loop which comprises translation error and gesture velocity error; and based on the estimated user-specific motor control parameters and user-specific motor control noise, differentiating between said user and another user.

In accordance with the present disclosure, for example, the method may comprise: based on said correlating, estimating a user-specific physiological trait of said user; and based on the user-specific physiological trait, differentiating between said user and another user.

In accordance with the present disclosure, for example, estimating the user-specific physiological trait of said user comprises at least one of: estimating a length of a finger of the user; estimating a width of a finger of the user; estimating a size-related parameter of a finger of the user; estimating a distance between a tip of a finger of the user and another part of a hand of the user.

In accordance with the present disclosure, for example, the method may comprise: based on said correlating, estimating a user-specific behavioral trait of said user; and based on the user-specific behavioral trait, differentiating between said user and another user.

In accordance with the present disclosure, for example, estimating the user-specific behavioral trait of said user comprises: determining that said user typically performs a particular inadvertent gesture while performing a user-intended input-providing gesture.

In accordance with the present disclosure, for example, estimating the user-specific behavioral trait of said user comprises one or more of: determining that said user typically moves the mobile electronic device at a particular direction while performing a touch gesture; determining that said user typically rotates the mobile electronic device while performing a touch gesture; determining that said user typically slants the mobile electronic device at a particular angle while performing a touch gesture.

In accordance with the present disclosure, for example, estimating the user-specific behavioral trait of said user comprises: determining that said user typically holds the mobile electronic device with a first hand of the user and concurrently performs an input-providing gesture with a second hand of the user.

In accordance with the present disclosure, for example, estimating the user-specific behavioral trait of said user comprises: determining that said user typically holds the mobile electronic device with a single hand and concurrently performs an input-providing gesture with said single hand.

In accordance with the present disclosure, for example, the method may comprise: based on said correlating, estimating a first user-specific behavioral trait of said user which corresponds to a first usage scenario; based on said correlating, estimating a second user-specific behavioral trait of said user which corresponds to a second usage scenario; based on the first and second user-specific behavioral traits, differentiating between said user and another user.

In accordance with the present disclosure, for example, the method may comprise: based on said correlating, estimating a first user-specific behavioral trait of said user which corresponds to a first usage scenario in which said user operates said mobile electronic device while the user holds said mobile electronic device; based on said correlating, estimating a second user-specific behavioral trait of said user which corresponds to a second usage scenario in which said user operates said mobile electronic device while the user does not hold said mobile electronic device; based on the first and second user-specific behavioral traits, differentiating between said user and another user.

In accordance with the present disclosure, for example, a mobile electronic device may be configured to confirm identity of a user of said mobile electronic device; the mobile electronic device comprising: a touch-screen to receive touch data; an accelerometer to receive acceleration data; a correlator module to correlate between the touch data and the acceleration data; a trait extractor module to generate a user-specific trait indicative of said user, based on correlation between the touch data and the acceleration data.

The present disclosure may provide other and/or additional benefits or advantages.

## BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.

Fig. 1 is a schematic block diagram illustration of a mobile electronic device, in accordance with some demonstrative embodiments of the present invention;
Fig. 2 is an illustration of three graphs, which demonstrate acceleration as a function of time over three separate axes, in accordance with some demonstrative embodiments of the present invention;
Fig. 3 is an illustration of a graph of the main axes of dimension-reduced space of accelerometer reaction to tapping, in accordance with some demonstrative embodiments of the present invention;
Fig. 4 is an illustration of a graph depicting feature space, in accordance with some demonstrative embodiments of the present invention; and
Fig. 5 is a flow-chart of a method in accordance with some demonstrative embodiments of the present invention.

## DETAILED DESCRIPTION OF THE PRESENT INVENTION

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.

Applicants have realized that each user of a mobile electronic device may handle the device in a unique manner which may be detected and may be utilized for confirming the identity of the user, or for other security-related purposes or fraud-detection purposes. Applicants have realized, for example, that different users cause different type of acceleration to the mobile device when they perform the same operation or touch-gesture (e.g., swiping or tapping or scrolling on the touch-screen), or may tilt or rotate or slant the mobile device in different, unique ways when they perform such gestures or operations.

The present invention may include, for example, biometric modalities, personal trait extraction modalities, and/or identity authentication modalities which may be used in conjunction with a mobile or portable electronic device, and may utilize a combination of (or correlation between) acceleration parameters and/or touch data. Such parameters may be used in order to deduce unique insights regarding the identity or possible identity of the user of the mobile electronic device, or in order to determine whether or not the user is considered to be the "genuine" user, or in contrast, an attacker or impersonator or "fraudster".

The present invention does capture, monitor, or otherwise utilize for deduction of insights, the coupling or correlation between (a) touch-screen interaction, or other user gestures, and (b) accelerometer(s) measurements and/or gyroscope(s) measurements. The present invention does further deduce and/or utilize one or more other biometric traits or identity-authentication traits, i.e., touch or swipe locations, pressure dynamics, identification of physiological regions (e.g., in the hand of the user) that move while other regions do not move when a user gesture is performed, or other suitable traits in order to assist in identification and/or authentication of the user of the mobile device.

The present invention may sufficiently capture unique qualities of a human user to be usable as a biometric for authentication. Different people may have different preferred orientations for holding or grasping (e.g., in their hand) a mobile device, and/or a different way in which they press or touch or tap the touch-screen (e.g., the applied force, the duration of the tapping, or the like).

Applicants have realized that physical traits such as, for example, hand size, hand mass, or other traits, may change the way in which a user's interacting hand and his device-holding hand are correlated. In a demonstrative example, the present invention may distinguish or differentiate between (a) a person who is using one single hand for both holding the mobile device and tapping on its touch-screen (or performing other touch gesture), and (b) a person who is using one hand to hold the mobile device and another hand to tap on its touch-screen (or to perform other touch gesture or user gesture).

Moreover, as Applicants have realized, different tap locations (e.g., top-left corner or region of the touch-screen, versus bottom-right corner or region) may create different torque(s) on the mobile device, further depending on the tap strength, the offset of the mobile device in the hand (e.g., the device being held high or low, with the palm area or the fingers area, or the like) and/or the size of the hand (e.g., if the same hand is used for both holding the device and tapping on its touch-screen).

The terms "mobile device" or "mobile electronic device" as used herein may include, for example, a smartphone, a cellular phone, a mobile phone, a tablet, a handheld device, a portable electronic device, a portable gaming device, a portable audio/video player, or the like.

The term "genuine user" as used herein may include, for example, an owner of a mobile electronic device; a legal or lawful user of a mobile electronic device; an authorized user of a mobile electronic device; a person who has legal authorization and/or legal right to utilize a mobile electronic device, for general purpose(s) and/or for one or more particular purpose(s); or the person who had originally defined user credentials (e.g., username and password) for performing an activity through the mobile electronic device.

The term "fraudulent user" as used herein may include, for example, any person who is not the "genuine user" of the mobile electronic device; an attacker; an intruder; a man-in-the-middle attacker; a man-in-the-browser attacker; an unauthorized user; an impersonator; a hacker; a cracker; a person attempting to hack or crack or compromise a security measure utilized by the mobile electronic device or utilized by an activity or service accessible through the mobile electronic device; a fraudster; a human fraudster; a "bot" or a malware or an automated computerized process (e.g., implemented by using software modules and/or hardware components) which attempts to imitate human behavior or which attempts to act as if such "bot" or malware or process was the genuine user; or the like.

The term "user gesture" as used herein may include, for example, a gesture or movement or other operation that a user of a mobile device performs on a touch-screen of the mobile device, or performs in proximity to the touch-screen of the mobile device; touch gesture; tap gesture or double-tap gesture or prolonged tap gesture; scroll gesture; drag gesture, or drag-and-drop gesture; release gesture; click or double-click gesture; hovering gestures, in which the user may hover with his finger(s) or hand(s) in proximity to the touch-screen of the mobile device but without necessarily touching the touch-screen device; hovering gestures that may be captured by a camera of the mobile device, or by a touch-screen of the mobile device (e.g., by taking into account electrical and/or magnetic effects of such gestures); hovering gestures which may be generally similar to touch-free hovering gestures that a Samsung Galaxy S4 smartphone is able to detect; finger(s) gestures and/or hand(s) gestures made in a three-dimensional space, for example, similar to movement gestures that a Microsoft Kinect motion sensing input device is able to sense; and/or a combination of such gestures or other gestures.

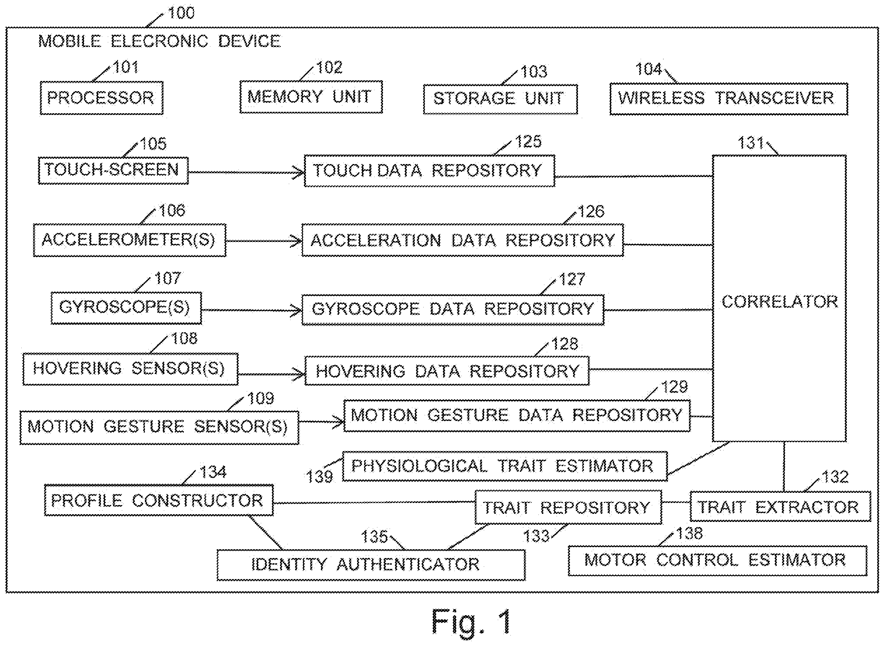

Reference is made to Fig. 1, which is a schematic block diagram illustration of a mobile device 100 in accordance with the present invention. Mobile device 100 may comprise, for example, a processor 101, a memory unit 102, a storage unit 103, a wireless transceiver 104, a touch-screen 105, one or more accelerometers 106, and one or more gyroscopes 107. Mobile device 100 may further comprise, for example, one or more hovering sensors 108, one or more motion gesture sensor(s) 109, a correlator 131, a trait extractor 132, a trait repository 133, a profile constructor module 134, an identity authenticator module 135, and a physiological trait estimator 139. Mobile device 100 may comprise other suitable hardware components and/or software modules, for example, a power source (e.g., a rechargeable battery), an Operating System, software applications, or the like.

Touch-screen 105 may receive user gestures, for example, tapping, double-tapping, dragging, pressing, holding down, releasing, scrolling, pinching fingers for zoom-out, spreading fingers for zoom-in, or the like). Touch data may be stored in a touch data repository 125, optionally in association with a time-stamp associated with each touch data-item being stored.

Accelerometer(s) 106 may comprise, for example, a three-axis accelerometer able to measure acceleration, separately, along three axes (X axis, Y axis, Z axis). Accelerometer readings may be stored in an acceleration data repository 126, optionally in association with a time-stamp associated with each acceleration data-item being stored.

Gyroscope(s) 107 may comprise, for example, a three-axis gyroscope able to measure orientation and/or rotation, e.g., separately along three axes (X axis, Y axis, Z axis). The measured data may be stored in a gyroscope data repository 127, optionally in association with a time-stamp associated with each orientation/rotation data-item being stored.

Hovering sensor(s) 108 may comprise, for example, one or more sensors (e.g., optical sensors, magnetic sensors, electric sensors, touch-screen components, camera components, or the like) able to sense hovering gesture(s) of the user of device 100, for example, in a three-dimensional space or separately along three axes (X axis, Y axis, Z axis). The measured data may be stored in a hovering data repository 128, optionally in association with a time-stamp associated with each hovering data-item being stored.

Motion gesture sensor(s) 109 may comprise, for example, one or more sensors able to sense motion gesture(s) of the user of device 100, for example, in a three-dimensional space or separately along three axes (X axis, Y axis, Z axis). The measured data may be stored in a motion gesture data repository 129, optionally in association with a time-stamp associated with each motion gesture data-item being stored.

Correlator 131 may search for, or identify or determine, correlation among (a) acceleration data and/or gyroscope data, and (b) touch data and/or hovering data and/or motion gesture data. Trait extractor 132 may determine one or more user-specific traits or characteristics which may be, or may appear to be, unique to (or indicative of) a particular user, based on one or more correlation(s) identified by correlator 131. Trait values or trait indicators, or data indicative of extracted user-specific traits, may be stored in a trait repository 133.

Profile constructor module 134 may utilize a learning algorithm to construct a user profile based on the one or more user-specific traits identified by trait extractor 132 and stored in trait repository 133. Profile construction may be performed over a per-defined time period (e.g., five hours, or three days) of the user interacting with device 100; or over a pre-defined number of interactions (e.g., 12 or 25 or 100 interactions) of the user with device 100. Optionally, profile constructor module 134 may dynamically extend or shorten or modify the required time-period or interaction number, for example, if traits of a particular user are distinctive and are rapidly extracted over a shorter period of time or over a smaller number of user interactions. Constructed user profiles may be stored in a user profile repository, which may be internal to device 100 or may be external thereto (e.g., in a remote server or in a "cloud computing" server), optionally with an associated flag or parameter indicating whether a particular user profile is fully constructed or under construction.

Identity authenticator module 135 may capture one or more traits of a user who is currently utilizing device 100, and may analyze and determine whether or not these traits are similar to, or different from, user-specific traits in a user profile associated with a user that is believed to be a "genuine" user of device 100. The analysis results may be notified by identity authenticator module 135 to other units or modules, within device 100 (e.g., an application or process running in device 100) and/or externally to device 100 (e.g., on a remote server, on a remote web-site or web-page, in a "cloud" server or device).

For example, if the analysis indicates that the current user of device 100 is not the genuine user, then, one or more fraud-stopping operations or additional authentication operations may be triggered and performed, for example, requiring the user to re-enter his password or pass-phrase or Personal Identification Number (PIN), requiring the user to answer one or more security questions, requiring the user to perform log-in operations or to provide account details (e.g., to provide date-of-birth data), requiring the user to place a phone call to a fraud department or a security department of a service or entity associated with an application running on device 100; blocking or restricting or curtailing access of the user to one or more services or features which may be generally available through device 100; or the like.

Correlator 131 may identify user-specific physiological correlations. For example, correlator 131 may identify one or more geometric place(s), on touch-screen 105 or in a space proximate to touch-screen 105, in which a user gesture is associated with movement of a user body part (e.g., the thumb; one or more fingers; the palm or wrist) while also being associated with rest or non-movement of other body parts of the user. Based on the user-specific physiological correlations, trait extractor 132 may extract user-specific physiological trait(s).

In a demonstrative example, trait extractor 132 may determine that for the user Adam, a vertical scroll-down touch-gesture is typically associated with movement of the root of the thumb, while the other fingers are at rest and while the wrist or palm-base are at rest; whereas, for the user Bob, a vertical scroll-down touch-gesture is typically associated with both movement of the root of the thumb, as well as with slight rotational movement of fingers that hold or support the rear of the mobile device, and while the wrist or palm-base are at rest. This may be subsequently used for user authentication or for identity confirmation, to distinguish between a "genuine" user (e.g., Adam) and a fraudulent user or non-genuine user (e.g., Bob) when the user of device 100 performs a similar user gesture.

In another demonstrative embodiment, correlator 131 may determine that the user of device 100 (e.g., the "genuine" user), while performing a primary gesture or an intended gesture (e.g., required in order to provide user input to device 100), typically also performs a secondary gesture or an inadvertent gesture (e.g., not required in order to provide user input to device 100). For example, the primary gesture may be a scrolling gesture, a zoom-in or zoom-out gesture, a dragging gesture, a tapping gesture, or other user input gesture; whereas, the secondary gesture (e.g., the inadvertent or unintended gesture, to which the user may not even be aware) may be, for example, slight or significant rotating or spinning of device 100, slight or significant movement of device 100 (e.g., in a particular direction), slight or significant tilting or slanting of device 100 (e.g., at a particular angle or range-of-angles), or the like.

In another demonstrative embodiment, correlator 131 may be associated with, or may operate in conjunction with, physiological trait estimator 139 which may be able to indirectly estimate one or more physiological traits or physiological characteristics of the user of device 100, and particularly, of the hand(s) or finger(s) (e.g., a finger, a thumb, or the like) of that user. For example, physiological trait estimator 139 may estimate a width of a finger or thumb based on a width of a swiping trace performed by the finger on touch-screen 105; may estimate a length of a finger or thumb based on a radius of a circular or arched or curved swiping motion on touch-screen 105; may estimate the distance between the tip of a finger or thumb and the palm of the hand, or the wrist; may estimate other dimensions of hand-parts, or relations between such hand parts; or the like. Physiological trait estimator 139 may thus estimate physiological characteristics which may be unique to a particular user, and may assist in confirming user identity and/or in detecting a non-genuine user impersonating the genuine user.

Additionally or alternatively, correlator 131 may be associated with, or may operate in conjunction with, a motor control estimator 138 which may estimate user-specific motor control parameters based on the user's interaction with mobile device 100. Such parameters may include, for example, parameters of the action-perception loop modeling the hand-eye coordination, as well as control loop parameter, motor noise, perception noise, or the like. Motor control estimator 138 may estimate user-specific parameters of motor control, which may be more inherent to the user and may be less action-dependent.

In a demonstrative implementation, for example, motor control estimator 138 may track a user gesture on the touch-screen (e.g., a scroll or swipe gesture). The movement or gesture may begin at rest in a start-point $(X_0, Y_0)$, and may end at rest in an end-point $(X_1, Y_1)$. A demonstrative control loop of the second order, assumes that the force of the hand is governed by a linear combination of two error terms: a translation error, and the current velocity error.

The translation error may be represented as:

$$\Delta x = \left( x_1 - x(t) \right)$$

The current velocity error may be represented as:

$$\Delta v_x = \frac{d}{dt} x(t)$$

The control loop may be represented (for the X-axis, and similarly and separately also for the Y-axis) as:

$$\frac{d^2 x(t)}{dt^2} = \alpha_x \Delta x + \beta_x v_x + n_x$$

In the last equation, $\alpha_x$ and $\beta_x$ are control loop parameters, and $n_x$ is motor control noise (e.g., Gaussian random variable). Accordingly, motor control estimator 138 may estimate or may simulate trajectories which may be similar to human trajectories; and although a velocity curve may be different for each movement of the same movement, the velocity curve may be generated by the same model parameters of that specific user. Motor control estimator 138 may thus estimate these three parameters (for the X-axis, and/or for the Y-axis), thereby estimating user-specific motor control traits which may be used for differentiating between a genuine user and an impersonator or attacker, regardless of the specific movement(s) or gesture(s) performed. The above is only a demonstrative example, and motor control estimator 138 may utilize other motor control estimations, forward model(s), feedback model(s), estimation of similar peak velocity (or other movement properties) for different movements (e.g., if the error terms are distorted by a non-linear function).

Additionally or alternatively, correlator 131 may identify user-specific behavioral correlations. Correlator 131 identifies that when a particular user performs a particular user-gesture, performance of the gesture affects in a particular way the acceleration data and/or the orientation/rotation data of device 100. Based on the user-specific behavioral correlations, trait extractor 132 extracts user-specific behavioral trait(s).

In a demonstrative example, trait extractor 132 may determine that for the user Adam, a horizontal swipe gesture is typically associated with a counter-clockwise rotation in the range of 10 to 15 degrees around a vertical axis (e.g., a rotation axis parallel to the longest dimension of device 100); whereas, for the user Bob, a horizontal swipe gesture is typically associated with a clockwise rotation in the range of 5 to 10 degrees (or, with substantially no rotation at all) around that vertical axis. This is subsequently used for user authentication or for identity confirmation, to distinguish between a "genuine" user (e.g., Adam) and a fraudulent user or non-genuine user (e.g., Bob) when the user of device 100 performs a similar user gesture.

Correlator 131 may be configured to search for, and detect, other user-specific behavioral correlations, for example: correlations based on the manner of holding device 100 (e.g., a primary angle of holding), and the effect of various user gestures on such holding or on the primary angle of holding; correlations based on the stability or the shakiness of device 100 (e.g., optionally taking into account the amount and/or frequency and/or timing of hand vibrations or hand movements), and the effect of various user gestures on such device stability or shakiness, or on stability or shakiness of the hand of the user that holds or operates device 100; correlations based on movement, spinning, rotation and/or acceleration of device 100, along one axis or two axes or three axes, as a result of (or concurrently with) a user gesture such as, for example, tap, double-tap, prolonged tap, release, drag, drag and drop, click, double-click, rotation or movement of an on-screen object, rotation of device 100 by 90 degrees or 180 degrees or 270 degrees, horizontal or vertical or diagonal swipe gesture, scroll gesture, zoom-in or zoom-out gestures, user operations on physical buttons or sliders or interface components of device 100 (e.g., volume interface, camera button, button for capturing an image or a video), or the like.

Correlator 131 may further detect correlations based on movement, spinning, rotation and/or acceleration of device 100, along one axis or two axes or three axes, that occur prior to or subsequent to a user gesture. For example, correlator 131 may detect that a first particular user typically tilts the phone from being generally perpendicular to the ground, to being generally parallel to the ground, immediately prior to performing a zoom-out gesture (e.g., a "pinching" gesture with two fingers on touch-screen 105). Similarly, correlator 131 may detect that a second particular user typically rotates the phone counter-clockwise, immediately subsequent to performing a zoom-in gesture (e.g., spacing apart two fingers on touch-screen 105). In some implementations, for example, a correlation may be detected while the user gesture is performed, immediately before the user gesture is performed (e.g., within 0.5 seconds prior to the user gesture), and/or immediately after the user gesture is performed (e.g., within 0.5 seconds subsequent to the user gesture).

Optionally, correlator 131 may detect other suitable correlations, and may take into account other types of readings or sensed data, for example, data indicating a temperature or moisture level or sweat level which may be associated with a user gesture, data indicating the amount of pressure or force applied by a user (e.g., when pressing on touch-screen 105), or the like.

In a demonstrative example, a first user may typically scroll down with his finger on touch-screen 105 while slightly rotating the mobile device 100 around its longest axis; and a correlation may be identified between the respective touch data and acceleration/orientation data, indicative of the first user. In contrast, a second user may typically scroll down while maintaining the mobile device 100 non-rotating, or while rotating mobile device 100 at a different direction or angle, or at a different acceleration value, thereby allowing to identify a different correlation, indicative of the second user.

Optionally, the present invention may identify, create and utilize a first set of behavioral traits which correspond to the behavior of a particular user when he is utilizing his mobile device in a first holding scenario (e.g., when the user is holding the mobile device in his hand), and a second (different) set of behavioral traits which correspond to the behavior of that particular user when he is utilizing his mobile device in a second holding scenario (e.g., when the mobile device is placed on a table or flat surface and the user operates the mobile device without holding it). Accordingly, the present invention may create and utilize a behavioral profile for that user, which may comprise multiple sub-profiles of behavioral traits that correspond to such multiple usage scenarios by the same (e.g., "genuine") user. In a subsequent usage of the mobile device, the system may compare the behavioral traits of the subsequent user, to each one (e.g., separately) of the pre-stored sets of behavioral traits (or behavioral sub-profiles), in order to detect or determine whether that subsequent user is the "genuine" user operating in one of the known usage scenarios, or alternatively a fraudulent user or attacker. Similarly, the present invention may generate and/or utilize complex profiles that may comprise of sub-profiles or sets of traits (e.g., behavioral traits, physiological traits, motor control traits), such that each set or sub-profile may correspond to a particular usage scenario or a particular holding scenario of the user; and a subsequent usage may be compared, separately, to each one of those sub-profiles (or sets of traits) in order to determine user authenticity.

The terms "correlation", "correlator", "to correlate", and similar or equivalent terms which may be used herein, are used for demonstrative purpose only; they may include, for example, statistical correlation, or statistically-significant correlation, or any other type of relation or indication or matching between two parameters or between groups of values. In some embodiments, there need not be statistically-significant correlation between, for example, touch data and acceleration data, in order to identify or extract unique user trait(s); but rather, there may be other type of relation or matching between touch-data and acceleration data in order to determine such "correlation".

In accordance with the present invention, mobile device 100 may continuously track and/or monitor the correlation between touch-data and acceleration/orientation data. Correlation values may be used to determine user-specific traits, that are indicative of the user of the mobile device 100, which may be regarded initially as the "genuine" user. Then, during subsequent usage of the mobile device 100, correlation between touch-data and acceleration/orientation data may be tracked and identified, and may be compared to the correlation previously-determined for the genuine user, in order to confirm that a current user is indeed the genuine user, or in order to determine or to estimate that a current user is a non-genuine user.

In a demonstrative implementation, an application or a website may be accessible through device 100 through an access control process or a user authentication process. Such application or website may be, for example, an email account, a social network account, a video conference application, a chat application, an online banking application or website, a securities trading application or website, an electronic commerce account or website, or the like. The user may be prompted to create a new user account (e.g., define a username and password); and then, or in parallel, user-specific traits may be captured through passive means and/or active means, which may be known to the user or may be hidden from the user.

For example, a profile creation page or application may require the user to perform various touch operations (e.g., tapping, scrolling, dragging, or the like), and may capture touch data as well as acceleration/orientation data, which may then be correlated in order to identify a biometric trait indicative of the user who is currently creating the profile, or who is otherwise believed to be a genuine user (e.g., based on password entry and/or responses to security questions or other challenge-response mechanisms). Optionally, an active challenge may be posed to the user, for example, by explicitly asking the user to perform one or more particular touch gestures on touch-screen 105, either as "hidden" challenges (in which the user is not aware that he is actively challenged for security purposes) or as non-hidden challenges (in which the user is advised that, as a security measure, he is required to perform certain touch gestures in order to extract biometric traits).

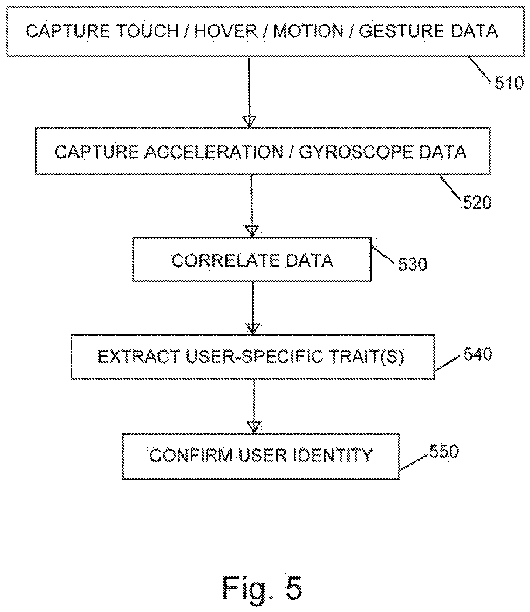

Reference is made to Fig. 5, which is a flow-chart of a method in accordance with some demonstrative embodiments of the present invention. The method may be implemented by a mobile electronic device, by one or more hardware components and/or software modules of a mobile electronic device, by a system, or the like.

The method may include, for example, capturing at least one of touch data, hovering data, motion data, gesture data (block 510).

The method may include, for example, capturing at least one of acceleration data, gyroscope data, device orientation/rotation data, principal axes rotation data (e.g., normal axis or yaw, lateral axis or pitch, longitudinal axis or roll) (block 520).

The operations of block 520 may be performed simultaneously or concurrently with, or in parallel to, the operations of block 510.

The method may include, for example, correlating or matching (block 530) between the data captured in block 510 and the data captured in block 520.

The method may include, for example, extracting a user-specific trait (block 540) based on the correlating or matching of block 530. The user-specific trait may include, for example, one or more behavioral traits, physiological traits, motor control traits, or other user-specific characteristics.

The method may include, for example, subsequently, confirming user identity based on said user-specific trait (block 550).

Other suitable operations may be used in accordance with the present invention. Some embodiments of the present invention may be utilized, or may operate, in conjunction with methods, algorithms, devices and/or systems which are described in PCT International Application Number PCT/IL2011/000907, titled "Method and Device for Confirming Computer End-User Identity", published on June 7, 2012 as International Publication Number WO/2012/073233; and/or in United States patent application number 13/877,676, filed on April 4, 2013.

In accordance with the present invention, correlation between touch-data and acceleration/orientation data may be identified and/or checked locally in mobile device 100; or remotely, such as in a remote server which may receive such data via a wireless communication link from mobile device 100; or by using other suitable architecture, for example, a hybrid architecture in which some operations may be performed locally and other operations may be performed remotely. Accordingly, components or modules that are depicted, for demonstrative purposes, as being included in mobile device 100, may be implemented at a remote server or within other suitable units. The present invention may be implemented in a stand-alone mobile device, such that data collection and processing may be performed within device 100; or in a client-server architecture, such that device 100 may collect data and may wirelessly transmit the collected data to a remote server for processing and analysis; or in a "cloud computing" architecture in which data is stored remotely and is also processed remotely. Other suitable architectures may be used, to deploy a system in which a particular mobile device "knows" or recognizes its genuine user, or, to deploy a system in which a particular application or website "know" or recognize a genuine user, based on the above-mentioned correlations.

In a demonstrative experiment in accordance with the present invention, multiple participants were asked to hold a particular mobile device (an iPad tablet), to drag (with a finger) a displayed green circle towards a displayed red target, and then to release the dragged item once it reached the red target. Accelerometer data and touch data were collected while performing the requested operations.

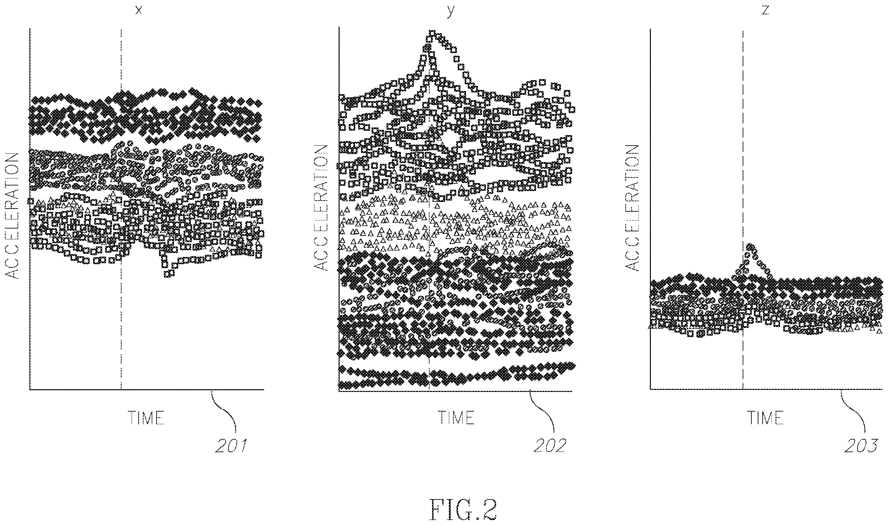

The experiment measured the touch and release signals, as well as accelerometer measurements; and then triggered the acceleration data according to the touch time. Fig. 2 depicts three graphs 201-203, which demonstrate acceleration as a function of time over three separate axes, thereby demonstrating at least two identifying characteristics which may be used as a user-specific trait. As a first identifying characteristic, the phasic level (observed at the X axis) may have different values for different people, corresponding to different posture of the mobile device. As a second identifying characteristic, the transient shape once the device is clicked (observed at the Z axis) may have different values for different people. This data may be transformed or analyzed, for example, by using dimension reduction techniques (e.g., kernel-principle-component-analysis), thereby demonstrating the biometric capability of synergizing between touch data and acceleration data.

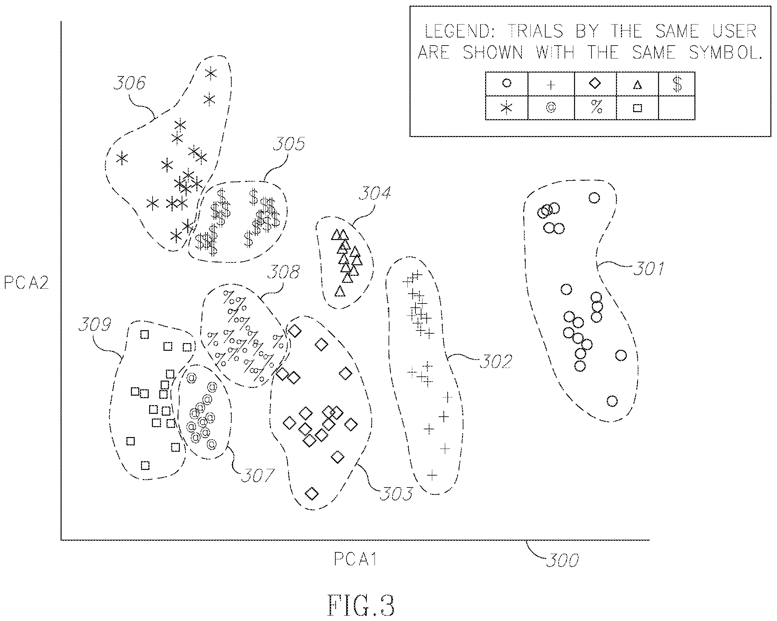

Reference is made to Fig. 3, which demonstrates a graph 300 of the main axes of the dimension-reduced space of the accelerometer reaction to tapping. Each small item in graph 300 represents one trial, and each shape or character in graph 300 (e.g., circle, square, diamond, triangle) represents a different user. This drawing demonstrates identifiable clusters 301-309 of trials, each such cluster corresponding to a different user.

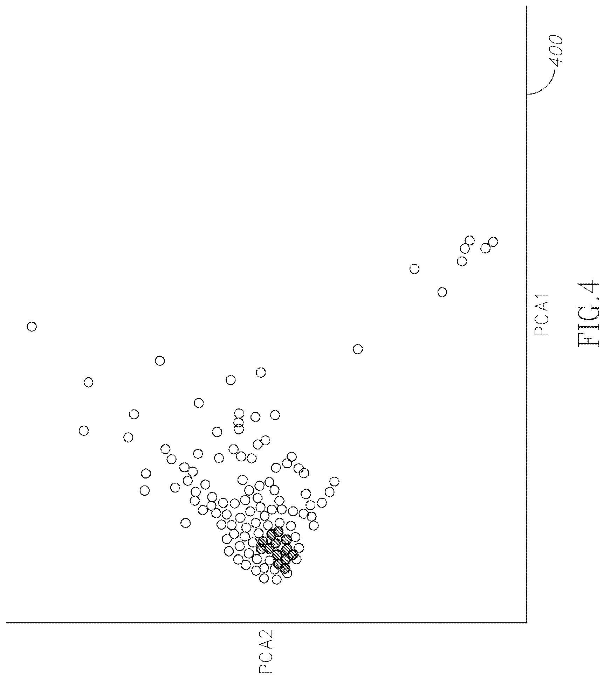

In certain scenarios, posture data (e.g., phasic response) may be neglected or may not be available, for example, if the mobile device is operated while being placed on a table or a flat surface and is not hand-held by the user. In such scenarios, only the device's kinematics during taps may be taken into account, and still the present invention may capture sufficient information for biometric functions. Reference is made to Fig. 4 which illustrates a graph 400 depicting the feature space, where each dot represents a trial; greyed circles represent trials performed by one particular user, and black circles represent trials performed by the other participants. This drawing demonstrates dimension reduction when only the device's kinematics are taken into account, showing that, still, sufficient significant biometric information may be captured and determined.

The present invention may be used in order to automatically identify that a user (e.g., an attacker or a "fraudster") is attempting to pose as (or impersonate, or "spoof") another user (e.g., the "real" user or the genuine user). In accordance with the present invention, the attacker would need to carefully and correctly imitate the exact accelerometer response for tapping (or for other suitable touch-screen operations, such as scrolling, dragging, releasing), taking into account the particular kinematics properties of the genuine user; and such imitation may be extremely difficult and unlikely, or even impossible, for most attackers.

The present invention may utilize signal processing and/or machine learning techniques, in order to build or generate a template model or a profile which corresponds to the genuine user; and then compare subsequent instance(s) or sample(s) to the pre-built (and locally stored, or remotely stored) model or profile. If the subsequent samples are consistent with the pre-built model or profile, then a first output score may be generated (e.g., having a high value in a predefined numeric range, such as a value of 98 on a scale of 0 to 100); whereas, if the subsequent samples are inconsistent with the pre-built model or profile, then a second output score may be generated (e.g., having a lower value on the predefined numeric range, such as a value of 34 on the scale of 0 to 100). In some implementations, an output score greater than a threshold value may be used (alone, or in combination with other biometric traits and/or other authentication measures) as an indication that the current user is the genuine user; whereas an output score lower than the threshold value may be used (alone, or in combination with other biometric traits and/or other authentication measures) as an indication that the current user is not the genuine user.

The present invention is further used to differentiate or distinguish between the genuine (human) user, and a robot or a machine-operable module or function (e.g., implemented as a computer virus, a Trojan module, a cyber-weapon, or other malware) which attempts to automatically imitate or emulate or simulate movement of a cursor or other interaction with a touch-screen. For example, false identity created by automated malware may be detected by the present invention as such automated malware may lack the characterization of human (e.g., manual) behavior, such as the touch features (e.g., speed, pressure) and/or its accelerometer correlated measurements.

The present invention may operate and may provide an efficient biometric or user-authentication modality, without capturing, storing, or otherwise identifying any Personally Identifiable Information (PII). For example, the present invention may be used to distinguish between a genuine user and a fraudster, without knowing any PPI of the genuine user and/or of the fraudster.

The present invention may detect correlations and extract user-specific traits based on passive data collection and/or based on active challenges. In passive data collection, the mobile device may detect that the user is performing a particular operation (e.g., a vertical scroll gesture), and may further detect that performing this gesture affects in a user-specific way the acceleration and/or the orientation/rotation of the mobile device. In an active challenge, the mobile device (or an application or process thereof) may actively present a challenge to the user, such as, a requirement to the user to perform horizontal scrolling, in order to capture data and detect user-specific correlation(s). The active challenge may be hidden or may be unknown to the user, for example, implemented by creating a Graphical User Interface (GUI) that requires the button to scroll in order to reach a "submit" button or a "next" button or a "continue" button, thereby "forcing" the user to unknowingly perform a particular user-gesture which may be useful for correlation detection or for extraction of user-specific traits, as described. Alternatively, the active challenge may be known to the user, and may be presented to the user as an additional security feature; for example, by requesting the user to drag and drop an on-screen object from a first point to a second point, as an action that may be taken into account for confirming user identity.

Some embodiments of the present invention may be implemented, for example, as a built-in or integrated security feature which may be a component or a module of a mobile device, or may be a downloadable or install-able application or module, or plug-in or extension; or as a module of a web-site or web-page, or of a client-server system or a "cloud computing" system; or as machine-readable medium or article or memory unit able to store instructions and/or code which, when executed by the mobile device or by other suitable machine (e.g., a remote server, or a processor or a computer) cause such machine to perform the method(s) and/or operations described herein. Some units, components or modules, that are shown in Fig. 1 for demonstrative purposes as comprised within mobile device 100, may be implemented externally to mobile device 100, may be implemented in a remote server, a web server, a website or webpage, a "cloud computing" server or database, a client/server system, a distributed system, a peer-to-peer network or system, or the like.

In some embodiments of the present invention, the analysis or correlation or matching (e.g., between accelerometer / gyroscope data, and touch-data or hovering data or other user-gesture data) may be location-based and/or application-based, or may otherwise take into account a geographical location or geo-spatial location of the mobile device or the application(s) being used or that are installed on the device. In a demonstrative example, a suitable module (e.g., a location-aware module or location-determining module) in the mobile device may determine the current location of the mobile device, based on GPS data or Wi-Fi data or cellular triangulation data or mobile network cell data or other location-identification techniques. The mobile phone may then utilize a suitable module (e.g., a correlator or matching module between location and user-specific behavioral usage traits) in order to deduce or determine, for example: that when the user utilizes his mobile device in a first location (e.g., in his office), then the mobile phone is typically placed horizontally on a flat surface (e.g., a table); that when the user utilizes his mobile phone in a second location or type of location (e.g., outdoor, on the street, in the park), then the mobile phone is typically held by the hand of the user at a slanted angle or diagonally (e.g., at approximately 45 to 60 degrees relative to the ground); that when the user utilizes his mobile phone in a third location or type of location (e.g., at a Point-Of-Sale (POS) terminal or register or cashier, at a supermarket or a retail store), then the mobile phone is typically held generally horizontally by the hand of the user (e.g., generally parallel to the ground); that when the user utilizes his mobile phone in a fourth location or type of location (e.g., at an Automatic Teller Machine (ATM) or a vending machine), then the mobile phone is typically held generally vertically by the hand of the user (e.g., at an angle of approximately 90 degrees, or between 80 to 100 degrees, relative to the ground); or the like. These determinations may be location-based or location-aware, thereby triangulating or crossing among three dimensions, namely, behavioral user-specific traits (e.g., holding the phone diagonally), gesture data (e.g., performing a scroll-down gesture), and location data (e.g., when utilizing the phone at a retailer); and such determinations may be part of the user-specific profile of that user. In a subsequent usage of the mobile device, similar determinations may be made, in order to analyze whether or not a current user is indeed the same user as in previous usage session(s) or is a "genuine" user. In a demonstrative example, this three-prone approach may raise an alert if, for example, typically the user of the mobile device holds his mobile device horizontally when performing a scroll-operation at a Point of Sale terminal; and in a subsequent usage session of the mobile device, a user holds that phone vertically when performing a scroll-operation at such Point of Sale terminal, thereby indicating that the subsequent user may not be the genuine or authorized user of the mobile device. In some embodiments, these multi-prone determinations may further be augmented with, or matched or correlated with, application-specific data or application-specific determinations, in order to improve the tailoring of the behavioral traits to the specific user. For example, the mobile device may differentiate and determine that the genuine user typically holds the phone vertically (e.g., anywhere, or in a particular location or type of location) when utilizing the camera application of the mobile device, but typically holds the phone horizontally (e.g., anywhere, or in that particular location or type of location) when utilizing the address book application of the mobile device; and these user-specific traits may be extracted and subsequently compared to data captured in a subsequent usage session of that mobile device, to authenticate user identity.

The present invention may be used in conjunction with various suitable devices and systems, for example, various devices that have a touch-screen; an ATM; a kiosk machine or vending machine that has a touch-screen; a touch-keyboard; a system that utilizes Augmented Reality (AR) components or AR glasses (e.g., Google Glass); a device or system that may detect hovering gestures that do not necessarily touch on the screen or touch-screen; a hovering screen; a system or device that utilize brainwave analysis or brainwave control in which the user's brainwaves are captured or read and the user's brain may directly control an application on the mobile device; and/or other suitable devices or systems.

Although portions of the discussion herein relate, for demonstrative purposes, to wired links and/or wired communications, some embodiments of the present invention are not limited in this regard, and may include one or more wired or wireless links, may utilize one or more components of wireless communication, may utilize one or more methods or protocols of wireless communication, or the like. Some embodiments may utilize wired communication and/or wireless communication.

While certain features of the present invention have been illustrated and described herein, many modifications, substitutions, changes, and equivalents may occur to those skilled in the art.

**Claims**

1. A computer-implemented method for confirming identity of a user of a mobile electronic device (100) having a touch-screen (105) that captures user gestures and touch-data, the method comprising:

   (a) identifying that when a particular user performs a particular user gesture on a particular electronic device (100), the performance of said particular user gesture affects in a particular way the acceleration data and the orientation data of said electronic device (100), and extracting a user-specific behavioral trait from said acceleration data and said orientation data;

(b) subsequently, distinguishing between the particular user and a second user of said particular electronic device (100), when the particular user or the second user performs a similar user gesture;

wherein the method further deduces and utilizes, in order to assist in identification and/or authentication of the user, at least one more biometric trait out of the following:

touch or swipe locations,
pressure dynamics,
identification of physiological regions that move while other regions do not move when a user gesture is performed;
**characterized in that** the method comprises:

based on said touch data, estimating user-specific motor control parameters and user-specific motor control noise of a control loop which comprises translation error and gesture velocity error; and
based on the estimated user-specific motor control parameters and user-specific motor control noise, differentiating between said user and another user.

2. The method of claim 1, further comprising:

requiring said particular user to perform one-or-more particular touch operations on a touch-screen (105) of said particular electronic device (100); and capturing touch-data, acceleration data, and orientation data;
posing to the user an active challenge in which the user is explicitly asked to perform said one-or-more particular touch operations on the touch-screen (105).

3. The method of claim 1, further comprising:
utilizing kinematics of said particular electronic device (105), during taps performed on said particular electronic device (105), as a biometric function for distinguishing among users.

4. The method of claim 1,

wherein the method constructs a user profile by utilizing a learning algorithm, based on the one or more user-specific traits identified by a trait extractor and stored in a trait repository; wherein profile construction is performed over a pre-defined time period of the user interacting with the mobile electronic device (100), or over a pre-defined number of interactions of the user with the mobile electronic device (100); wherein the user profile is stored in a user profile repository;
wherein the method dynamically extends or shortens or modifies the required time-period or interaction number, if traits of a particular user are distinctive and are rapidly extracted over a shorter period of time or over a smaller number of user interactions.

5. The method of claim 1,

wherein the method utilizes a correlator (131) to identify user-specific physiological correlations, and to identify one or more geometric places, on the touch-screen (105) or in a space proximate to the touch-screen (105), in which a user gesture is associated with movement of a user body part while also being associated with rest or non-movement of other body parts of the user;
wherein based on the user-specific physiological correlations, the method extracts user-specific physiological traits.

6. The method of claim 1,
wherein the method utilizes a correlator (131) to determine that the genuine user of the mobile electronic device (100), while performing a primary gesture or an intended gesture that is required in order to provide user input to the mobile electronic device (100), typically also performs a secondary gesture or an inadvertent gesture that is not required in order to provide user input to the mobile electronic device (100).

7. The method of claim 6,

wherein the primary gesture is one of: a scrolling gesture, a zoom-in gesture, a zoom-out gesture, a dragging gesture, a tapping gesture;

wherein the secondary gesture is one of: slight rotating or spinning of the mobile electronic device (100), significant rotating or spinning of the mobile electronic device (100), slight movement of the mobile electronic device (100) in a particular direction, significant movement of the electronic device (100) in a particular direction, slight tilting or slanting of the mobile electronic device (100) at a particular angle or range-of-angles, significant tilting or slanting of the mobile electronic device (100) at a particular angle or range-of-angles.

8. The method of claim 1, wherein the method comprises:

detecting correlations and extracting user-specific traits based on passive data collection and based on active challenges;

wherein in passive data collection, the method comprises: detecting that the user is performing a particular operation, and detecting that performing this gesture affects in a user-specific way the acceleration and the orientation and the rotation of the mobile electronic device (100);

wherein in an active challenge, the method comprises: actively presenting a challenge to the user, in order to capture data and detect user-specific correlations;

wherein said active challenge is one of: (I) hidden and unknown to the user, forcing the user to unknowingly perform a particular user gesture which may be useful for correlation detection or for extraction of user-specific traits; (II) known to the user, and presented to the user as an additional security feature.

9. The method of claim 1, wherein the method comprises:

determining a current location of the mobile electronic device (100), based on Global Positioning System (GPS) data or Wi-Fi data or cellular triangulation data or mobile network cell data or other location-identification techniques;

determining that when the user utilizes his mobile electronic device (100) in a first location, then the mobile electronic device (100) is typically placed horizontally on a flat surface;

determining that when the user utilizes his mobile electronic device (100) in a second location or type of location, then the mobile electronic device (100) is typically held by the hand of the user at a slanted angle or diagonally;

determining that when the user utilizes his mobile electronic device (100) in a third location or type of location, then the mobile electronic device (100) is typically held generally horizontally by the hand of the user;

determining that when the user utilizes his mobile electronic device (100) in a fourth location or type of location, then the mobile phone is typically held generally vertically by the hand of the user;

wherein said determinations are location-based or location-aware, and comprise triangulating or crossing among three dimensions which are: (i) behavioral user-specific traits, (ii) gesture data, and (iii) location data;

wherein said determinations are part of the user-specific profile of that user;

wherein in a subsequent usage of the mobile electronic device (100), similar determinations are made in order to analyze whether or not a current user is indeed the same user as in previous usage sessions or is a genuine user.

10. The method of claim 1, wherein the method comprises:
raising an alert if: typically the user of the mobile electronic device (100) holds his mobile electronic device (100) horizontally when performing a scroll-operation at a Point of Sale terminal; and in a subsequent usage session of the mobile electronic device (100), a user holds that mobile electronic device (100) vertically when performing a scroll-operation at such Point of Sale terminal, thereby indicating that the subsequent user is not the genuine or authorized user of the mobile electronic device (100).

11. The method of claim 9, wherein the method comprises:
correlating between said determinations and application-specific data or application-specific determinations, in order to improve the tailoring of the behavioral traits to the specific user.

12. The method of claim 11, wherein the method comprises:
determining that the genuine user typically holds the phone vertically when utilizing a first application of the mobile electronic device (100), but typically holds the mobile electronic device (100) horizontally when utilizing a second application of the mobile electronic device (100); and extracting these user-specific traits, and subsequently comparing them to data captured in a subsequent usage session of that mobile electronic device (100), to authenticate user identity.

**13.** The method of any one of claims 1-12,
wherein the electronic device is an electronic device selected from the group consisting of: a smartphone, a tablet, a portable gaming device, a portable audio/video player.

**14.** A system for confirming identity of a user of a mobile electronic device (100) having a touch-screen (105) that captures user gestures and touch-data, the system comprising:

one or more processors, associated with one or more memory units,
wherein the one or more processors are configured to perform a process comprising:

(a) identifying that when a particular user performs a particular user gesture on a particular electronic device (100), the performance of said particular user gesture affects in a particular way the acceleration data and the orientation data of said electronic device (100), and extracting a user-specific behavioral trait from said acceleration data and said orientation data;
(b) subsequently, distinguishing between the particular user and a second user of said particular electronic device (100), when the particular user or the second user performs a similar user gesture;

wherein the method further deduces and utilizes, in order to assist in identification and/or authentication of the user, at least one more biometric trait out of the following:

touch or swipe locations,
pressure dynamics,
identification of physiological regions that move while other regions do not move when a user gesture is performed;
**characterized in that** the process comprises:

based on said touch data, estimating user-specific motor control parameters and user-specific motor control noise of a control loop which comprises translation error and gesture velocity error; and
based on the estimated user-specific motor control parameters and user-specific motor control noise, differentiating between said user and another user.

**15.** The system of claim 14,
wherein the electronic device is an electronic device selected from the group consisting of: a smartphone, a tablet, a portable gaming device, a portable audio/video player.

**Patentansprüche**

**1.** Computerimplementiertes Verfahren zum Bestätigen einer Identität eines Benutzers einer mobilen elektronischen Vorrichtung (100), die einen Berührungsbildschirm (105) aufweist, der Benutzergesten und Berührungsdaten erfasst, wobei das Verfahren Folgendes umfasst:

a) Identifizieren, dass, wenn ein spezieller Benutzer eine spezielle Benutzergeste auf einer speziellen elektronischen Vorrichtung (100) durchführt, die Durchführung der speziellen Benutzergeste auf eine spezielle Weise die Beschleunigungsdaten und die Ausrichtungsdaten der elektronischen Vorrichtung (100) beeinflusst, und Extrahieren eines benutzerspezifischen Verhaltensmerkmals aus den Beschleunigungsdaten und den Ausrichtungsdaten;
b) anschließendes Unterscheiden zwischen dem speziellen Benutzer und einem zweiten Benutzer der speziellen elektronischen Vorrichtung (100), wenn der spezielle Benutzer oder der zweite Benutzer eine ähnliche Benutzergeste durchführt;
wobei das Verfahren ferner, um bei einer Identifizierung und/oder einer Authentifizierung des Benutzers zu unterstützen, wenigstens ein weiteres biometrisches Merkmal der Folgenden ableitet und verwendet:

Berühren oder Wischen von Positionen,
Druckdynamik,
Identifizieren von physiologischen Bereichen, die sich bewegen, während sich andere Bereiche nicht bewegen, wenn eine Benutzergeste durchgeführt wird;
**dadurch gekennzeichnet, dass** das Verfahren Folgendes umfasst:

basierend auf den Berührungsdaten, Schätzen von benutzerspezifischen Motorsteuerparametern und benutzerspezifischen Motorsteuergeräuschen einer Steuerschleife, die einen Übersetzungsfehler und einen Gestengeschwindigkeitsfehler umfasst; und

basierend auf den geschätzten benutzerspezifischen Motorsteuerparametern und den benutzerspezifischen Motorsteuergeräuschen, Differenzieren zwischen dem Benutzer und einem anderen Benutzer.

2. Verfahren nach Anspruch 1, das ferner Folgendes umfasst:

Anfordern des speziellen Benutzers, eine oder mehrere spezielle Berührungsabläufe auf einem Berührungsbildschirm (105) der speziellen elektronischen Vorrichtung (100) durchzuführen; und Erfassen von Berührungsdaten, Beschleunigungsdaten und Ausrichtungsdaten;

Aufstellen einer aktiven Aufforderung an den Benutzer, bei der der Benutzer ausdrücklich gebeten wird, die eine oder die mehreren speziellen Berührungsabläufe auf dem Berührungsbildschirm (105) durchzuführen.

3. Verfahren nach Anspruch 1, das ferner Folgendes umfasst:
Verwenden von Kinematik der speziellen elektronischen Vorrichtung (105) während Antippen, das auf der speziellen elektronischen Vorrichtung (105) durchgeführt wird, als eine biometrische Funktion zum Unterscheiden zwischen Benutzern.

4. Verfahren nach Anspruch 1,

wobei das Verfahren ein Benutzerprofil durch Verwenden eines Lernalgorithmus aufbaut, basierend auf dem einen oder den mehreren benutzerspezifischen Merkmalen, die durch einen Merkmalextraktor identifiziert und in einem Merkmalrepository gespeichert werden; wobei der Profilaufbau über eine vordefinierte Zeitperiode, in dem der Benutzer mit der mobilen elektronischen Vorrichtung (100) interagiert, oder über eine vordefinierte Anzahl von Interaktionen des Benutzers mit der mobilen elektronischen Vorrichtung (100) durchgeführt wird; wobei das Benutzerprofil in einem Benutzerprofilrepository gespeichert wird;

wobei das Verfahren die erforderliche Zeitperiode oder die Interaktionsanzahl dynamisch erweitert oder verkürzt oder modifiziert, falls Merkmale eines speziellen Benutzers eindeutig sind und über eine kürzere Zeitperiode oder über eine kleinere Anzahl von Benutzerinteraktionen schnell extrahiert werden.

5. Verfahren nach Anspruch 1,

wobei das Verfahren einen Korrelator (131) verwendet, um benutzerspezifische physiologische Korrelationen zu identifizieren und um eine oder mehrere geometrische Stellen auf dem Berührungsbildschirm (105) oder in einem Raum nahe dem Berührungsbildschirm (105) zu identifizieren, in denen eine Benutzergeste einer Bewegung eines Körperteils eines Benutzers zugeordnet ist, während sie ebenso einer Ruhe oder Nichtbewegung anderer Körperteile des Benutzers zugeordnet ist;

wobei, basierend auf den benutzerspezifischen physiologischen Korrelationen, das Verfahren benutzerspezifische physiologische Merkmale extrahiert.

6. Verfahren nach Anspruch 1,
wobei das Verfahren einen Korrelator (131) verwendet, um zu bestimmen, dass der wahre Benutzer der mobilen elektronischen Vorrichtung (100), während eine primäre Geste oder eine beabsichtigte Geste durchgeführt wird, die erforderlich ist, um Benutzereingaben an die mobile elektronische Vorrichtung (100) bereitzustellen, typischerweise ebenso eine sekundäre Geste oder eine unbeabsichtigte Geste durchführt, die nicht erforderlich ist, um Benutzereingaben an die mobile elektronische Vorrichtung (100) bereitzustellen.

7. Verfahren nach Anspruch 6,

wobei die primäre Geste Folgendes ist: eine Bildlaufgeste, eine Vergrößerungsgeste, eine Verkleinerungsgeste, eine Ziehgeste oder eine Antippgeste;

wobei die sekundäre Geste Folgendes ist: leichtes Rotieren oder Drehen der mobilen elektronischen Vorrichtung (100), signifikantes Rotieren oder Drehen der mobilen elektronischen Vorrichtung (100), leichte Bewegung der mobilen elektronischen Vorrichtung (100) in eine spezielle Richtung, signifikante Bewegung der elektronischen Vorrichtung (100) in eine spezielle Richtung, leichtes Kippen oder Neigen der mobilen elektronischen Vorrichtung (100) in einem speziellen Winkel oder Winkelbereich oder signifikantes Kippen oder Neigen der mobilen elektronischen Vorrichtung (100) in einem speziellen Winkel oder Winkelbereich.

8. Verfahren nach Anspruch 1, wobei das Verfahren Folgendes umfasst:

   Feststellen von Korrelationen und Extrahieren von benutzerspezifischen Merkmalen basierend auf passiver Datensammlung und basierend auf aktiven Aufforderungen;
   wobei bei einer passiven Datensammlung das Verfahren Folgendes umfasst: Feststellen, dass der Benutzer einen speziellen Ablauf durchführt, und Feststellen, dass das Durchführen dieser Geste auf eine benutzerspezifische Weise die Beschleunigung und die Ausrichtung und die Rotation der mobilen elektronischen Vorrichtung (100) beeinflusst;
   wobei in einer aktiven Aufforderung das Verfahren Folgendes umfasst: aktives Präsentieren einer Aufforderung an den Benutzer, um Daten zu erfassen und benutzerspezifische Korrelationen festzustellen;
   wobei die aktive Aufforderung Folgendes ist: (I) dem Benutzer verborgen und unbekannt, Drängen des Benutzers, unwissentlich eine spezielle Benutzergeste durchzuführen, die für eine Korrelationsfeststellung oder für eine Extraktion von benutzerspezifischen Merkmalen nützlich sein kann; oder (II) dem Benutzer bekannt und dem Benutzer als ein zusätzliches Sicherheitsmerkmal präsentiert.

9. Verfahren nach Anspruch 1, wobei das Verfahren Folgendes umfasst:

   Bestimmen einer aktuellen Position der mobilen elektronischen Vorrichtung (100) basierend auf Daten eines globalen Positionierungssystems (GPS) oder WLAN-Daten oder zellularen Triangulationsdaten oder Mobilfunknetzwerkzelldaten oder anderen Positionsidentifikationstechniken;
   Bestimmen, dass dann, wenn der Benutzer seine mobile elektronische Vorrichtung (100) an einer ersten Position verwendet, die mobile elektronische Vorrichtung (100) typischerweise horizontal auf einer flachen Oberfläche platziert wird;
   Bestimmen, dass dann, wenn der Benutzer seine mobile elektronische Vorrichtung (100) an einer zweiten Position oder einer Art von Position verwendet, die mobile elektronische Vorrichtung (100) typischerweise durch die Hand des Benutzers in einem schrägen Winkel oder diagonal gehalten wird;
   Bestimmen, dass dann, wenn der Benutzer seine mobile elektronische Vorrichtung (100) an einer dritten Position oder einer Art von Position verwendet, die mobile elektronische Vorrichtung (100) typischerweise im Allgemeinen horizontal durch die Hand des Benutzers gehalten wird;
   Bestimmen, dass dann, wenn der Benutzer seine mobile elektronische Vorrichtung (100) an einer vierten Position oder einer Art von Position verwendet, das Mobiltelefon typischerweise im Allgemeinen vertikal durch die Hand des Benutzers gehalten wird;
   wobei die Bestimmungen positionsbasiert oder positionsbewusst sind und Triangulieren oder Kreuzen zwischen drei Dimensionen umfassen, die Folgendes sind: (i) benutzerspezifische Verhaltensmerkmale, (ii) Gestendaten und (iii) Positionsdaten;
   wobei die Bestimmungen Teil des benutzerspezifischen Profils dieses Benutzers sind;
   wobei bei einer anschließenden Benutzung der mobilen elektronischen Vorrichtung (100) ähnliche Bestimmungen vorgenommen werden, um zu analysieren, ob ein aktueller Benutzer tatsächlich derselbe Benutzer wie in vorhergehenden Benutzungssitzungen ist oder ein wahrer Benutzer ist.

10. Verfahren nach Anspruch 1, wobei das Verfahren Folgendes umfasst:
    Auslösen einer Warnung, falls: typischerweise der Benutzer der mobilen elektronischen Vorrichtung (100) seine mobile elektronische Vorrichtung (100) horizontal hält, wenn ein Bildlaufablauf an einem Point-Of-Sale-Terminal durchgeführt wird; und in einer anschließenden Benutzungssitzung der mobilen elektronischen Vorrichtung (100) ein Benutzer die mobile elektronische Vorrichtung (100) vertikal hält, wenn ein Bildlaufablauf an einem Point-Of-Sale-Terminal durchgeführt wird, wobei dadurch angezeigt wird, dass der anschließende Benutzer nicht der wahre oder der autorisierte Benutzer der mobilen elektronischen Vorrichtung (100) ist.

11. Verfahren nach Anspruch 9, wobei das Verfahren Folgendes umfasst:
    Korrelieren zwischen den Bestimmungen und anwendungsspezifischen Daten oder anwendungsspezifischen Bestimmungen, um das Anpassen der Verhaltensmerkmale an den spezifischen Benutzer zu verbessern.

12. Verfahren nach Anspruch 11, wobei das Verfahren Folgendes umfasst:
    Bestimmen, dass der wahre Benutzer das Telefon typischerweise vertikal hält, wenn eine erste Anwendung der mobilen elektronischen Vorrichtung (100) verwendet wird, jedoch typischerweise die mobile elektronische Vorrichtung (100) horizontal hält, wenn eine zweite Anwendung der mobilen elektronischen Vorrichtung (100) verwendet wird; und Extrahieren dieser benutzerspezifischen Merkmale und anschließendes Vergleichen davon mit Daten, die in einer anschließenden Benutzungssitzung dieser mobilen elektronischen Vorrichtung (100) erfasst werden, um eine Benutzeridentität zu authentifizieren.

13. Verfahren nach einem der Ansprüche 1-12,
wobei die elektronische Vorrichtung eine elektronische Vorrichtung ist, die aus der Gruppe ausgewählt ist, die aus Folgendem besteht: einem Smartphone, einem Tablet, einer tragbaren Spielvorrichtung, einem tragbaren Audio-/Video-Player.

14. System zum Bestätigen einer Identität eines Benutzers einer mobilen elektronischen Vorrichtung (100), die einen Berührungsbildschirm (105) aufweist, der Benutzergesten und Berührungsdaten erfasst, wobei das System Folgendes umfasst:

einen oder mehrere Prozessoren, die einer oder mehreren Speichereinheiten zugeordnet sind,
wobei der eine oder die mehreren Prozessoren konfiguriert sind, um einen Vorgang durchzuführen, der Folgendes umfasst:

a) Identifizieren, dass, wenn ein spezieller Benutzer eine spezielle Benutzergeste auf einer speziellen elektronischen Vorrichtung (100) durchführt, die Durchführung der speziellen Benutzergeste auf eine spezielle Weise die Beschleunigungsdaten und die Ausrichtungsdaten der elektronischen Vorrichtung (100) beeinflusst, und Extrahieren eines benutzerspezifisches Verhaltensmerkmals aus den Beschleunigungsdaten und den Ausrichtungsdaten;
b) anschließendes Unterscheiden zwischen dem speziellen Benutzer und einem zweiten Benutzer der speziellen elektronischen Vorrichtung (100), wenn der spezielle Benutzer oder der zweite Benutzer eine ähnliche Benutzergeste durchführt;

wobei das Verfahren ferner, um bei einer Identifizierung und/oder einer Authentifizierung des Benutzers zu unterstützen, wenigstens ein weiteres biometrisches Merkmal der Folgenden ableitet und verwendet:

Berühren oder Wischen von Positionen,
Druckdynamik,
Identifizieren von physiologischen Bereichen, die sich bewegen, während sich andere Bereiche nicht bewegen, wenn eine Benutzergeste durchgeführt wird;
**dadurch gekennzeichnet, dass** der Vorgang Folgendes umfasst:

basierend auf den Berührungsdaten, Schätzen von benutzerspezifischen Motorsteuerparametern und benutzerspezifischen Motorsteuergeräuschen einer Steuerschleife, die einen Übersetzungsfehler und einen Gestengeschwindigkeitsfehler umfasst; und
basierend auf den geschätzten benutzerspezifischen Motorsteuerparametern und den benutzerspezifischen Motorsteuergeräuschen, Differenzieren zwischen dem Benutzer und einem anderen Benutzer.

15. System nach Anspruch 14,
wobei die elektronische Vorrichtung eine elektronische Vorrichtung ist, die aus der Gruppe ausgewählt ist, die aus Folgendem besteht: einem Smartphone, einem Tablet, einer tragbaren Spielvorrichtung, einem tragbaren Audio-/Video-Player.

**Revendications**

1. Procédé mis en œuvre par ordinateur destiné à confirmer l'identité d'un utilisateur d'un dispositif électronique mobile (100) ayant un écran tactile (105) qui capture les gestes de l'utilisateur et les données tactiles, le procédé comprenant :

(a) l'identification du fait que lorsqu'un utilisateur particulier effectue un geste d'utilisateur particulier sur un dispositif électronique particulier (100), la réalisation dudit geste d'utilisateur particulier affecte d'une manière particulière les données d'accélération et les données d'orientation dudit dispositif électronique (100), et l'extraction d'un trait comportemental spécifique à l'utilisateur à partir desdites données d'accélération et desdites données d'orientation ;
(b) par la suite, la distinction entre l'utilisateur particulier et un second utilisateur dudit dispositif électronique particulier (100), lorsque l'utilisateur particulier ou le second utilisateur effectue un geste d'utilisateur similaire ;
dans lequel le procédé déduit et utilise en outre, afin d'aider à l'identification et/ou à l'authentification de l'utilisateur, au moins un trait biométrique supplémentaire parmi les suivants :

des emplacements de toucher ou de balayage,
une dynamique de pression,
l'identification des régions physiologiques qui se déplacent tandis que d'autres régions ne se déplacent pas lorsqu'un geste d'utilisateur est effectué ;
**caractérisé en ce que** le procédé comprend :

sur la base desdites données de toucher, l'estimation des paramètres de commande de moteur spécifiques à l'utilisateur et du bruit de commande du moteur spécifique à l'utilisateur d'une boucle de commande qui comprend une erreur de translation et une erreur de vitesse de geste ; et
sur la base des paramètres de commande de moteur spécifiques à l'utilisateur estimés et du bruit de commande de moteur spécifique à l'utilisateur, la différenciation entre ledit utilisateur et un autre utilisateur.

2. Procédé selon la revendication 1, comprenant en outre :

la demande audit utilisateur particulier d'effectuer une ou plusieurs opérations tactiles particulières sur un écran tactile (105) dudit dispositif électronique particulier (100) ; et la capture de données de toucher, de données d'accélération et de données d'orientation ;
la proposition à l'utilisateur d'un défi actif dans lequel il est explicitement demandé à l'utilisateur d'effectuer lesdites une ou plusieurs opérations tactiles particulières sur l'écran tactile (105).

3. Procédé selon la revendication 1, comprenant en outre :
l'utilisation de la cinématique dudit dispositif électronique particulier (105), pendant les prises effectuées sur ledit dispositif électronique particulier (105), comme fonction biométrique pour distinguer les utilisateurs.

4. Procédé selon la revendication 1,

dans lequel le procédé construit un profil d'utilisateur en utilisant un algorithme d'apprentissage, sur la base du ou des traits spécifiques à l'utilisateur identifiés par un extracteur de traits et stockés dans un référentiel de traits ; dans lequel la construction de profil est effectuée sur une période de temps prédéfinie de l'utilisateur interagissant avec le dispositif électronique mobile (100), ou sur un nombre prédéfini d'interactions de l'utilisateur avec le dispositif électronique mobile (100) ; dans lequel le profil d'utilisateur est stocké dans un référentiel de profils d'utilisateur ;
dans lequel le procédé étend ou raccourcit ou modifie dynamiquement la période de temps ou le nombre d'interactions requis, si les traits d'un utilisateur particulier sont distinctifs et sont rapidement extraits sur une période de temps plus courte ou sur un plus petit nombre d'interactions d'utilisateur.

5. Procédé selon la revendication 1,

dans lequel le procédé utilise un corrélateur (131) pour identifier des corrélations physiologiques spécifiques à l'utilisateur, et pour identifier une ou plusieurs positions géométriques, sur l'écran tactile (105) ou dans un espace à proximité de l'écran tactile (105), dans lequel un geste de l'utilisateur est associé au mouvement d'une partie du corps de l'utilisateur tout en étant également associé au repos ou au non-mouvement d'autres parties du corps de l'utilisateur ;
dans lequel sur la base des corrélations physiologiques spécifiques à l'utilisateur, le procédé extrait des traits physiologiques spécifiques à l'utilisateur.

6. Procédé selon la revendication 1,
dans lequel le procédé utilise un corrélateur (131) pour déterminer que l'utilisateur authentique du dispositif électronique mobile (100), tout en effectuant un geste principal ou un geste prévu qui est requis afin de fournir une entrée utilisateur au dispositif électronique mobile (100), effectue généralement également un geste secondaire ou un geste par inadvertance qui n'est pas requis afin de fournir une entrée utilisateur au dispositif électronique mobile (100).

7. Procédé selon la revendication 6,

dans lequel le mouvement principal est l'un parmi : un geste de défilement, un geste de zoom avant, un geste de zoom arrière, un geste de d'entraînement d'image, un geste de tapotement ;

dans lequel le geste secondaire est l'un parmi : une légère rotation ou un léger pivotement du dispositif électronique mobile (100), une rotation ou un pivotement significatif du dispositif électronique mobile (100), un léger mouvement du dispositif électronique mobile (100) dans une direction particulière, un mouvement significatif du dispositif électronique (100) dans une direction particulière, une légère inclinaison ou un léger basculement du dispositif électronique mobile (100) à un angle particulier ou à une plage d'angles particulière, une inclinaison ou un basculement significatif du dispositif électronique mobile (100) à un angle particulier ou à une plage d'angles particulière.

8. Procédé selon la revendication 1, dans lequel le procédé comprend :

la détection des corrélations et l'extraction des traits spécifiques à l'utilisateur sur la base de la collecte de données passives et sur la base de défis actifs ;

dans lequel dans la collecte de données passives, le procédé comprend : la détection du fait que l'utilisateur est en train d'effectuer une opération particulière, et la détection du fait que la réalisation de ce geste affecte d'une manière spécifique à l'utilisateur l'accélération et l'orientation et la rotation du dispositif électronique mobile (100) ;

dans lequel dans un défi actif, le procédé comprend : la présentation active d'un défi à l'utilisateur, afin de capturer des données et de détecter des corrélations spécifiques à l'utilisateur ;

dans lequel ledit défi actif est l'un parmi : (I) caché et inconnu de l'utilisateur, le fait de forcer l'utilisateur à effectuer sans le savoir un geste d'utilisateur particulier qui peut être utile pour la détection de corrélation ou pour l'extraction de traits spécifiques à l'utilisateur ; (II) connu de l'utilisateur, et présenté à l'utilisateur comme caractéristique de sécurité supplémentaire.

9. Procédé selon la revendication 1, dans lequel le procédé comprend :

la détermination d'une localisation actuelle du dispositif électronique mobile (100), sur la base de données du système de positionnement global (GPS) ou de données Wi-Fi ou de données de triangulation cellulaire ou de données cellulaires de réseau mobile ou d'autres techniques d'identification de localisation ;

la détermination du fait que lorsque l'utilisateur utilise son dispositif électronique mobile (100) dans un premier emplacement, alors le dispositif électronique mobile (100) est généralement placé horizontalement sur une surface plane ;

la détermination du fait que lorsque l'utilisateur utilise son dispositif électronique mobile (100) dans un deuxième emplacement ou type d'emplacement, alors le dispositif électronique mobile (100) est généralement tenu par la main de l'utilisateur à un angle incliné ou en diagonale ;

la détermination du fait que lorsque l'utilisateur utilise son dispositif électronique mobile (100) dans un troisième emplacement ou type d'emplacement, alors le dispositif électronique mobile (100) est généralement tenu dans l'ensemble horizontalement par la main de l'utilisateur ;

la détermination du fait que lorsque l'utilisateur utilise son dispositif électronique mobile (100) dans un quatrième emplacement ou type d'emplacement, alors le téléphone mobile est généralement tenu dans l'ensemble verticalement par la main de l'utilisateur ;

dans lequel lesdites déterminations sont basées sur la localisation ou tiennent compte de la localisation, et comprennent la triangulation ou le croisement entre trois dimensions qui sont : (i) des traits comportementaux spécifiques à l'utilisateur, (ii) des données gestuelles, et (iii) des données de localisation ;

dans lequel lesdites déterminations font partie du profil spécifique à l'utilisateur de cet utilisateur ;

dans lequel dans une utilisation ultérieure du dispositif électronique mobile (100), des déterminations similaires sont effectuées afin d'analyser si un utilisateur actuel est ou non le même utilisateur que dans les sessions d'utilisation précédentes ou s'il est un utilisateur authentique.

10. Procédé selon la revendication 1, dans lequel le procédé comprend :

le déclenchement d'une alerte si : généralement l'utilisateur du dispositif électronique mobile (100) tient son dispositif électronique mobile (100) horizontalement lors de la réalisation d'une opération de défilement à un terminal de point de vente ; et dans une session d'utilisation ultérieure du dispositif électronique mobile (100), un utilisateur tient ce dispositif électronique mobile (100) verticalement lors de la réalisation d'une opération de défilement audit terminal de point de vente, indiquant ainsi que l'utilisateur ultérieur n'est pas l'authentique ou l'utilisateur autorisé du dispositif électronique mobile (100).

**11.** Procédé selon la revendication 9, dans lequel le procédé comprend :
la corrélation entre lesdites déterminations et des données spécifiques à l'application ou des déterminations spécifiques à l'application, afin d'améliorer l'adaptation des traits comportementaux spécifiques à l'utilisateur.

**12.** Procédé selon la revendication 11, dans lequel le procédé comprend :
la détermination du fait que l'utilisateur authentique tient généralement le téléphone verticalement lors de l'utilisation d'une première application du dispositif électronique mobile (100), mais tient généralement le dispositif électronique mobile (100) horizontalement lors de l'utilisation d'une seconde application du dispositif électronique mobile (100) ; et l'extraction de ces traits spécifiques à l'utilisateur, et leur comparaison ultérieure aux données capturées dans une session d'utilisation ultérieure de ce dispositif électronique mobile (100), pour authentifier l'identité de l'utilisateur.

**13.** Procédé selon l'une quelconque des revendications 1 à 12,
dans lequel le dispositif électronique est un dispositif électronique sélectionné dans le groupe constitué par : un téléphone intelligent, une tablette, un dispositif de jeu portable, un lecteur audio / vidéo portable.

**14.** Système destiné à confirmer l'identité d'un utilisateur d'un dispositif électronique mobile (100) ayant un écran tactile (105) qui capture les gestes de l'utilisateur et les données tactiles, le système comprenant :

un ou plusieurs processeurs, associés à une ou plusieurs unités de mémoire,
dans lequel le ou les processeurs sont configurés pour effectuer un processus comprenant :

(a) l'identification du fait que lorsqu'un utilisateur particulier effectue un geste d'utilisateur particulier sur un dispositif électronique particulier (100), la réalisation dudit geste d'utilisateur particulier affecte d'une manière particulière les données d'accélération et les données d'orientation dudit dispositif électronique (100), et l'extraction d'un trait comportemental spécifique à l'utilisateur à partir desdites données d'accélération et desdites données d'orientation ;
(b) par la suite, la distinction entre l'utilisateur particulier et un second utilisateur dudit dispositif électronique particulier (100), lorsque l'utilisateur particulier ou le second utilisateur effectue un geste d'utilisateur similaire ;

dans lequel le procédé déduit et utilise en outre, afin d'aider à l'identification et/ou à l'authentification de l'utilisateur, au moins un trait biométrique supplémentaire parmi les suivants :

des emplacements de toucher ou de balayage,
une dynamique de pression,
l'identification des régions physiologiques qui se déplacent tandis que d'autres régions ne se déplacent pas lorsqu'un geste d'utilisateur est effectué ;
**caractérisé en ce que** le procédé comprend :

sur la base desdites données de toucher, l'estimation des paramètres de commande de moteur spécifiques à l'utilisateur et du bruit de commande de moteur spécifique à l'utilisateur d'une boucle de commande qui comprend une erreur de translation et une erreur de vitesse de geste ; et
sur la base des paramètres de commande de moteur spécifiques à l'utilisateur estimés et du bruit de commande de moteur spécifique à l'utilisateur, la différenciation entre ledit utilisateur et un autre utilisateur.

**15.** Système selon la revendication 14,
dans lequel le dispositif électronique est un dispositif électronique sélectionné dans le groupe constitué par : un téléphone intelligent, une tablette, un dispositif de jeu portable, un lecteur audio / vidéo portable.

Fig. 1

EP 3 011 483 B1

FIG.2

FIG.3

FIG.4

```
┌─────────────────────────────────────────────────────┐
│  CAPTURE TOUCH / HOVER / MOTION / GESTURE DATA        │
└─────────────────────────────────────────────────────┘
                                              └ 510
                          │
                          ▽
      ┌───────────────────────────────────────────┐
      │   CAPTURE ACCELERATION / GYROSCOPE DATA     │
      └───────────────────────────────────────────┘
                                          └ 520
                          │
                          ▽
          ┌───────────────────────────┐
          │      CORRELATE DATA        │── 530
          └───────────────────────────┘
                          │
                          ▽
      ┌───────────────────────────────────────┐
      │     EXTRACT USER-SPECIFIC TRAIT(S)      │── 540
      └───────────────────────────────────────┘
                          │
                          ▽
          ┌───────────────────────────┐
          │    CONFIRM USER IDENTITY    │─ 550
          └───────────────────────────┘
```

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012167170 A
- US 2013135218 A
- US 2010225443 A
- IL 2011000907 W
- WO 2012073233 A
- US 87767613